# EUROPÄISCHE PATENTSCHRIFT

(11) **EP 1 958 801 B1**
(45) Veröffentlichungstag und Bekanntmachung des Hinweises auf die Patenterteilung: **22.05.2013**
(21) Anmeldenummer: 08001679.3
(22) Anmeldetag: 30.01.2008
(51) Int. Cl.: B60G 7/00, B60G 9/00

(54) **Achseinbindung für eine gefederte Fahrzeugachse**
Axle fixation for a vehicle sprung axle
Fixation d'essieu pour un essieu suspendu de véhicule

(30) Priorität: 13.02.2007 DE 102007006972
(43) Veröffentlichungstag der Anmeldung: 20.08.2008
(60) Teilanmeldung: 12150345.2
(73) Patentinhaber: BPW Bergische Achsen KG, 51674 Wiehl (DE)
(72) Erfinder: Rossenbach, Bernhard, 51674 Wiehl (DE)
(74) Vertreter: Christophersen, Ulrich Rudolf

(56) Entgegenhaltungen:
- EP-A1- 0 625 440
- WO-A2-2006/116513
- DE-C1- 4 342 952
- US-A- 3 773 347
- US-A1- 2003 042 787
- US-A1- 2004 212 166

## Beschreibung

Die Erfindung betrifft eine Achseinbindung für eine gefederte Fahrzeugachse mit einem langgestreckten Achskörper, den Achskörper an seiner Ober- oder Unterseite kreuzenden Längslenkern sowie quer sowohl zu den Längslenkern, wie auch zu dem Achskörper verlaufenden, diese Teile in gegenseitiger Anlage einbindenden Zugelementen, wobei der Achskörper im Einbindungsbereich mit einer Formstruktur versehen ist, welche den Längslenker in Längsrichtung des Achskörpers örtlich bindet.

Bei einer aus der EP 1 088 687 A1 bekannten Achseinbindung ist der Längslenker dort, wo sich Achskörper und Längslenker kreuzen, um den Achskörper gekrümmt. Auf diese Weise lässt sich der Achskörper an der Unterseite des Längslenkers in der gebildeten Aushöhlung anordnen, wobei die Kontur der Aushöhlung im Wesentlichen der zylindrischen Umfangskontur des Achskörpers entspricht. Im Bereich der Achseinbindung ist der Achskörper durch zwei Halbschalen verstärkt. Um die sich kreuzenden Teile in dieser Anordnung zu fixieren, sind Zugelemente in Gestalt U-förmiger Bügel um den Achskörper geführt. Die freien Bügelenden stützen sich an einer Platte ab, die sich im Kreuzungsbereich von oben auf dem Längslenker abstützt. Mittels der Zugelemente werden Längslenker und Achskörper in gegenseitiger Anlage eingebunden. Infolge der Anordnung des zylindrischen Achskörpers innerhalb einer teilweisen Umbiegung durch den Längslenker ist die Achseinbindung in Fahrzeuglängsrichtung ausreichend fixiert. In seitlicher Richtung hingegen hängt die Qualität der Fixierung letztlich von der Stärke ab, mit der die Zugelemente angezogen sind.

Eine ähnliche Achseinbindung ist aus der DE 296 15 286 U1 bekannt. Auch diese ist hinsichtlich der im Fahrbetrieb auftretenden seitlichen Kräfte abhängig von der Stärke, mit welcher die Achskörper und Längslenker gegeneinander beaufschlagenden Zugelemente angezogen sind.

Eine Achseinbindung mit den Merkmalen des Oberbegriffs ist aus der US 2004/0212166 A1 bekannt. Auch bei dieser Achseinbindung sind zur gegenseitigen Fixierung von Achskörper und Längslenker Zugelemente in Gestalt U-förmiger Bügel um den Achskörper geführt. Bei einer Ausführungsform des im Querschnitt rechteckigen Achskörpers ist dieser im Bereich der Anlage des Längslenkers mit einer Einsenkung in Gestalt einer Rinne von teilkreisförmigem Querschnitt versehen. Umgekehrt ist der Längslenker mit einem Vorsprung von zu der Rinne korrespondierender Gestalt versehen, um so die Teile zueinander zu positionieren. Die Gestaltung der Rinne in dem Achskörper und des korrespondierenden Vorsprungs an dem Längslenker jeweils als Rundung ist zwar für eine gegenseitige Positionierung dieser Teile ausreichend, vermag jedoch keinen wirklichen Formschluss bereitzustellen, der auch bei den im Praxisbetrieb hohen seitlichen Kräften auf die Achseinbindung noch ausreichend wäre. Vielmehr ist auch bei der Achseinbindung nach der US 2004/0212166 A1 die Übertragung seitlicher Kräfte von der Stärke abhängig, mit welcher die Achskörper und Längslenker gegeneinander beaufschlagenden Zugelemente angezogen sind.

Der Erfindung liegt die **Aufgabe** zugrunde, die Achseinbindung hinsichtlich der im Fahrbetrieb auftretenden seitlichen Kräfte zu verbessern.

Zur **Lösung** dieser Aufgabe wird eine Achseinbindung mit den Merkmalen des Anspruchs 1 vorgeschlagen.

Infolge der Formstruktur, welche den Längslenker und/oder die Zugelemente formkorrespondierend aufnimmt, vermag die Achseinbindung die im Fahrbetrieb auftretenden seitlichen Kräfte zu übertragen, ohne dass diese Übertragung ausschließlich von der Stärke abhängig wäre, mit welcher die Zugelemente die beteiligten Teile in eine gegenseitige Anlage einbinden, d.h. gegeneinander ziehen.

Die Formstruktur ist eine auf einen Längsabschnitt des Achskörpers beschränkte Vertiefung, die als eine Verformung des Rohrquerschnitts ausgestaltet ist.

Gemäß einer Ausführungsform befindet sich die Vertiefung auf einem dem Längslenker abgewandten Teilumfang des Achskörpers, wobei das Achskörper und Längslenker in kreuzender Anordnung verbindende Zugelement in der Vertiefung sitzt. Auf diese Weise wird verhindert, dass das Zugelement, etwa aufgrund der im Fahrbetrieb auftretenden seitlichen Kräfte, in Längsrichtung des Achskörpers verrutscht oder versetzt.

Gemäß einer bevorzugten Ausgestaltung der Achseinbindung weist die Formstruktur zwei Stützflächen auf, von denen sich die eine von der einen und die andere von der anderen Seite her gegen den Längslenker abstützt. Auf diese Weise ist ein Versatz des Längslenkers in Längsrichtung des Achskörpers ausgeschlossen, ohne dass es entscheidend auf die Stärke ankommt, mit welcher die sich kreuzenden Teile gegeneinander gezogen werden.

Mit einer weiteren Ausgestaltung wird vorgeschlagen, dass die der gegenseitigen Anlage von Achskörper und Längslenker dienende Anlagefläche im Wesentlichen eben gestaltet ist. Des Weiteren wird vorgeschlagen, dass die Stützflächen gemeinsam mit der Anlagefläche eine kanalförmig gestaltete Lenkeraufnahme bilden.

Weiter wird vorgeschlagen, dass sich der Achskörper aus mehreren Längsabschnitten zusammensetzt, und dass die Längsabschnitte umfassen:
a) zwei Verbindungsabschnitte, an denen einstückig die Formstrukturen ausgebildet sind und b) ein Zentralrohr als mittleren Längsabschnitt, an dessen Enden die Verbindungsabschnitte vorzugsweise durch Schweißen befestigt sind.

Zu den Längsabschnitten des Achskörpers können ferner auch Radträgerabschnitte gehören, die außen an den Verbindungsabschnitten befestigt sind, vorzugsweise durch Schweißen.

Gemäß einer weiteren Ausgestaltung kann jeder Verbindungsabschnitt entlang einer in Achskörperlängsrichtung verlaufenden Trennebene in zwei Formhälften unterteilt sein. Diese Formhälften können Halbschalen sein, die sich zu einem Rohrstück ergänzen. Zur Reduzierung des Gewichts bei zugleich hoher Festigkeit kann das durch die Halbschalen gebildete Rohrstück einen Rechteckquerschnitt mit vier Wandabschnitten und vier Übergangsradien aufweisen. Zur Gewichtsreduzierung muss die Wandstärke in den Übergangsradien nicht größer sein, als die Wandstärke in den Wandabschnitten.

Des Weiteren wird vorgeschlagen, dass die beiden Stützflächen und die Anlagefläche einstückig an der ersten Formhälfte angeformt sind. Dies kann von Vorteil sein, wenn die Formhälfte ein preiswert in großen Stückzahlen herstellbares Schmiedebauteil ist. Zur Erhöhung der Haltbarkeit kann der Verbindungsabschnitt in den Anlagebereichen eine dickere, d.h. verstärkte Wandstärke aufweisen.

Ausführungsbeispiele der Achseinbindung werden im Folgenden anhand der zugehörigen Zeichnungen erläutert. Darin zeigen:
- Figur 1: die Achseinbindung einer gefederten Fahrzeugachse in einer Seitenansicht;
- Figur 2: die Achseinbindung in einer perspektivischen Darstellung, wobei der Achskörper und der Längslenker geschnitten dargestellt sind;
- Figur 3: eine zweite nicht von der Erfindung umfasste Ausführungsform der Achseinbindung in einer Seitenansicht;
- Figur 4: die Gegenstände nach Figur 3 in einer perspektivischen und entlang des Längslenkers geschnittenen Darstellung;
- Figur 5: eine dritte nicht von der Erfindung umfasste Ausführungsform einer Achseinbindung in perspektivischer Darstellung und
- Figur 6: die Gegenstände nach Figur 5, jedoch nach Art einer Explosionsdarstellung getrennt.

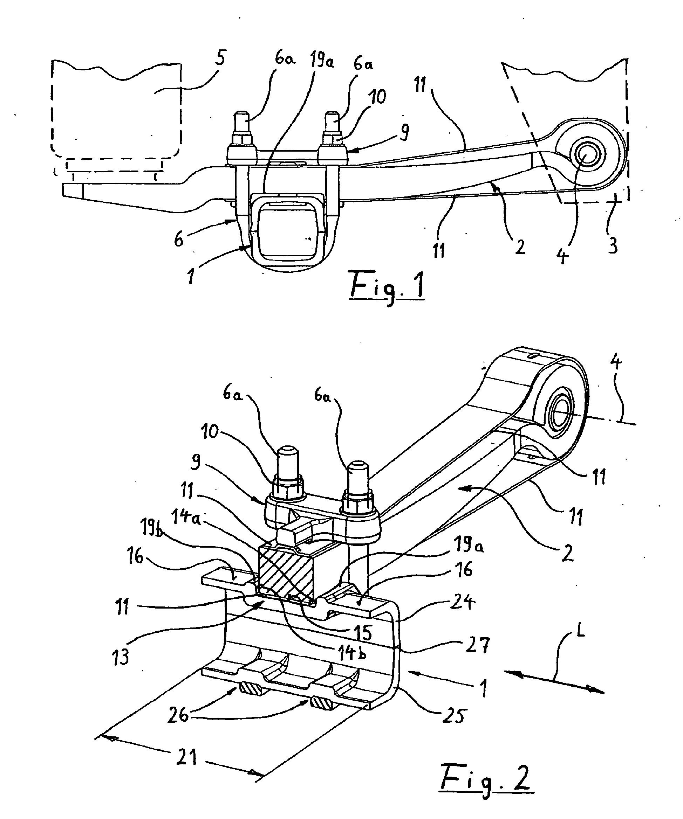

Die in Fig. 1 in einer Ansicht von der Seite her dargestellte, luftgefederte Fahrzeugachse findet vor allem bei Schwerlastfahrzeugen, z.B. Lkw-Anhängern, als nicht-angetriebene Achse Verwendung. Die Fahrzeugachse verfügt über einen durchgehenden, starren Achskörper 1, an dessen Enden sich die Radnaben mit den Fahrzeugrädern befinden. Der dargestellte Achskörper 1 ist insgesamt rohrförmig und setzt sich aus mehreren Längsabschnitten zusammen.

Zu seinen Enden hin ist der Achskörper 1 an jeweils einem Längslenker 2 abgestützt, welcher den Achskörper 1 kreuzt. Die beiden Längslenker 2, von denen jeweils nur ein Längslenker dargestellt ist, sind von rechteckigem Querschnitt und bei dem hier beschriebenen Ausführungsbeispiel als Lenkerfedern gestaltet und bestehen aus einem stark dimensionierten Federstahl. Im Bereich der Verbindung von Längslenker 2 und Achskörper 1 ist die Unterseite des Längslenkers flach und eben gestaltet und insbesondere frei von irgendwelchen Verbindungsstrukturen. In Fahrzeugrichtung vorne ist jeder Längslenker 2 an einer fahrzeugfesten Konsole 3 um die Achse 4 verschwenkbar gelagert. An ihrem anderen, hinteren Ende stützt sich die Lenkerfeder über eine Luftfeder 5 gegenüber dem Fahrzeugchassis ab.

Die Achseinbindung, d.h. die sich kreuzende Verbindung des Achskörpers 1 mit dem jeweiligen Längslenker 2, erfolgt mittels Zugelementen 6, die quer sowohl zu dem Längslenker 2, wie auch zu dem Achskörper 1 verlaufen.

Bei dem Ausführungsbeispiel nach den Figuren 1 und 2 werden für jede Achseinbindung zwei Zugelemente 6 in Gestalt von U-Bügeln verwendet. Der eine U-Bügel befindet sich auf der einen Seite und der andere U-Bügel auf der anderen Seite des Längslenkers 2. Jeder U-Bügel umschließt mit seinem Bogen den Achskörper 1, wobei die freien Enden 6a sich bis oberhalb des Längslenkers 2 erstrecken. In diesem Bereich ist jedes Zugelement 6 als Gewindestange ausgebildet. Deren Gewindeabschnitte erstrecken sich durch eine Platte 9 hindurch, welche Platte 9, dem Achskörper 1 abgewandt, auf dem Längslenker 2 aufsitzt. Die Platte 9, welche seitlich über den Längslenker 2 übersteht, weist dort Bohrungen für den Durchtritt der Gewindeabschnitte der Zugelemente 6 auf. Über Muttern 10 erfolgt das Anziehen der Zugelemente 6, wodurch diese den Achskörper 1 und den jeweiligen Längslenker 2 in gegenseitiger Anlage einbinden. Separate Formschlusselemente zwischen Achskörper 1 und Längslenker 2 sind bei dieser Bauweise nicht erforderlich. Allenfalls ein an sich übliches Fangblech 11, welches Bestandteil des Längslenkers 2 ist, kann sich noch zwischen Achskörper 1 und Lenkerfeder befinden, wie dies Figur 2 zeigt.

Fig. 2 gibt einen vertikalen Schnitt durch die Mittelebene des Achskörpers 1 wieder und lässt daher die Merkmale der Achseinbindung erkennen. Im Einbindungsbereich, und auch nur dort, ist der Achskörper 1 mit einer Formstruktur 13 versehen, welche eine Lenkeraufnahme bildet. Die Formstruktur 13 nimmt den Längslenker 2 formkorrespondierend auf, und bindet diesen in Längsrichtung L des Achskörpers, d.h. quer zur Fahrtrichtung. Im Einzelnen weist die Formstruktur 13 zwei Stützflächen 14a, 14b auf, wobei sich die Stützfläche 14a von der einen und die Stützfläche 14b von der anderen Seite her gegen die Seitenwand des Längslenkers 2 abstützt. Durch diese Gestaltung ist ein seitlicher Versatz des Achskörpers 1 in Bezug auf den Längslenker 2 ausgeschlossen. Zwischen den einander zugewandten Stützflächen 14a, 14b erstreckt sich eine im Wesentlichen eben gestaltete Anlagefläche 15, wodurch die Stützflächen 14a, 14b gemeinsam mit dieser Anlagefläche 15 eine im Querschnitt kanalförmig gestaltete Lenkeraufnahme bilden. An der Anlagefläche 15 kann sich der Achskörper 1 unmittelbar, d.h. durch direkten Kontakt, an dem Längslenker 2 abstützen, eventuell unter Zwischenlage des bereits beschriebenen Fangblechs 11 des Längslenkers.

Gemäß Fig. 2 kann die Anlagefläche 15 im Vergleich zu der übrigen Außenseite 16 des Achskörpers 1 abgesenkt sein. In diesem Fall befindet sich die Anlagefläche 15 näher an der Achskörpermittellinie, als die benachbarten Bereiche der Achskörper-Außenseite 16. Beide können aber auch in derselben Ebene liegen. Für größte Festigkeit bei geringem Gewicht kann es von Vorteil sein, wenn das Material des Achskörpers 1 im Bereich der Anlageflächen 15 eine größere Dicke aufweist.

Zur Bildung genügend ausgeprägter Stützflächen 14a, 14b tragen Rippen 19a, 19b bei, welche die benachbarten Achskörper-Außenseiten 16 überragen.

Die Lenkeraufnahme 13 des Achskörpers 1 im Bereich der Einbindung lässt sich an einem Achskörper in Gestalt eines durchgehenden Achsrohres nur schwer herstellen. Bevorzugt wird vielmehr eine Gestaltung des Achskörpers aus einzelnen Längsabschnitten, wobei der im Einbindungsbereich gelegene Längsabschnitt des Achskörpers als Verbindungsabschnitt 21 gestaltet und im folgenden auc so bezeichnet wird ist. Die Länge dieses Verbindungsabschnitts 21 in Achskörper-Längsrichtung L ist wie in Figur 2 dargestellt. Nach Fahrzeuginnen schließt sich an den Verbindungsabschnitt 21 des Achskörpers ein auf der Zeichnung nicht dargestelltes Zentralrohr an. Das Zentralrohr weist, ebenso wie der dargestellte Verbindungsabschnitt 21, einen Rechteckquerschnitt auf, dessen Kanten als Übergangsradien gestaltet sind. Die Befestigung des Verbindungsabschnitts 21 an dem fahrzeugmittig angeordneten Zentralrohr des Achskörpers erfolgt durch Schweißen.

An seinem anderen, fahrzeugaußen liegenden Ende ist an den dargestellten Verbindungsabschnitt 21 ein Radträgerabschnitt angeschweißt. Bestandsteil des Radträgerabschnitts ist der Achsschenkel für die Lagerung des Fahrzeugrades sowie ferner ein Flansch oder Träger für die Befestigung der Fahrzeugbremse.

Der Achskörper 1 setzt sich daher in Längsrichtung L aus insgesamt fünf Längsabschnitten zusammen, nämlich dem ersten Radträgerabschnitt, dem ersten Verbindungsabschnitt 21, dem Zentralrohr, dem zweiten Verbindungsabschnitt 21 sowie dem zweiten Radträgerabschnitt.

Bei dem Ausführungsbeispiel nach den Figuren 1 und 2 ist der Verbindungsabschnitt 21 des Achskörpers seinerseits in zwei Formhälften 24, 25 unterteilt. Die Formhälfte 24 ist die dem Längslenker 2 zugewandte Formhälfte, an der auch die Formstruktur bzw. Lenkeraufnahme 13 einstückig ausgebildet ist. Die andere Formhälfte 25 bildet hingegen den dem Längslenker abgewandten Teilumfang des Achskörpers. Die Formhälfte 25 ist mit einer Formstruktur 26 in Gestalt zweier Vertiefungen versehen. In jeder Vertiefung sitzt der U-förmige Bügelbereich eines der beiden Zugelemente 6. Die als Vertiefungen gestalteten Formstrukturen 26 nehmen daher die Zugelemente 6 formkorrespondierend auf und binden diese in Längsrichtung L des Achskörpers, wodurch es zu keinem Verrutschen der U-Bügel relativ zu dem Achskörper kommen kann.

Aus Gewichtsgründen sind die beschriebenen Formhälften 24, 25 nicht massiv, sondern sie sind als Halbschalen ausgebildet. Die Halbschalen ergänzen sich mittels zweier in Längsrichtung L geführten Schweißnähte 27 zu einem Rohrstück, welches der Verbindungsabschnitt 21 ist. Die Herstellung der beiden Halbschalen kann durch Hochdruckinnenformen, durch Kaltfließpressen oder konventionell durch Schmieden erfolgen. Mit allen diesen Verfahren ist es möglich, die Wandstärken der halbschalenförmigen Formhälften 24, 25 exakt gemäß dem jeweiligen Belastungszustand zu dimensionieren. Von Vorteil ist insbesondere, wenn die Wandstärke im Bereich der Übergangsradien 28 des Verbindungsabschnitts 21 gleich und jedenfalls nicht größer ist, als die Wandstärke in den vier ebenen Wandabschnitten. Bei konventionellen Achskörpern in Gestalt von langgestreckten, quadratischen Achsrohren hingegen fallen durch die notwendige Festigkeit im Bereich der Achseinbindung die Wanddicken im Bereich der Übergangsradien größer aus, als im Bereich der ebenen Wandabschnitte. Dies führt zu einer gewichtserhöhenden Materialanhäufung in den Radienbereichen.

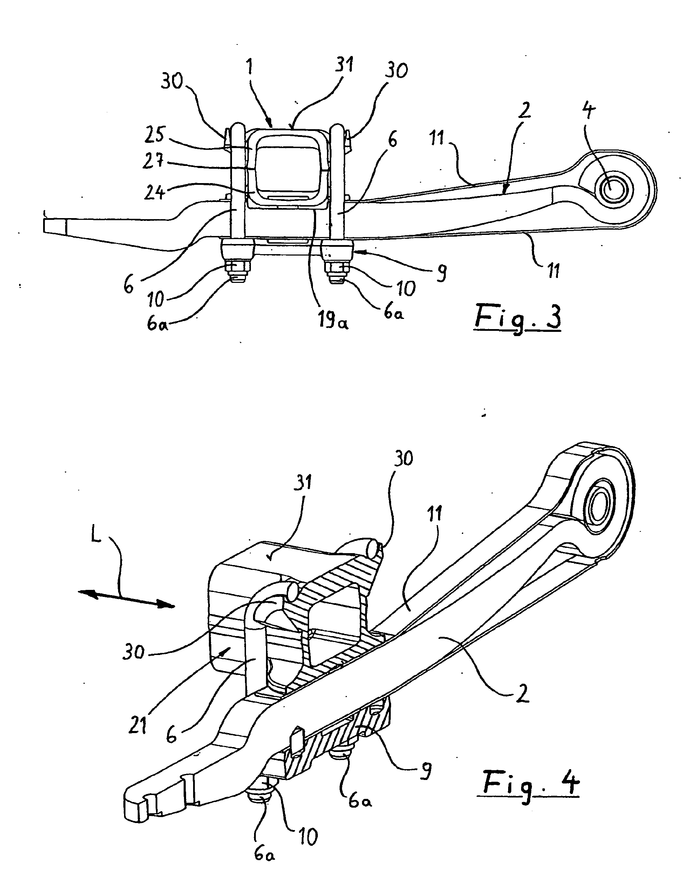

In den Figuren 3 und 4 sowie 5 und 6 sind jeweils weitere nicht von der Erfindung umfasste Ausführungsformen der Achseinbindung dargestellt. Für gleiche oder gleich wirkende Teile werden darin dieselben Bezugszeichen wie bei dem ersten Ausführungsbeispiel verwendet.

Bei der Ausführungsform nach den Figuren 3 und 4 ist die Anordnung von Achskörper und Längslenker umgekehrt, d.h. der Achskörper 1 befindet sich oben und der Längslenker 2 unten. Anders ist auch die Anordnung der beiden Zugelemente 6. Diese sind zwar ebenfalls bügelförmig gestaltet, jedoch schlingt sich jeder Bügel nicht um den Achskörper 1, sondern um den Längslenker 2. Als Widerlager für jedes Zugelement 6 dient ein einstückig an der Formhälfte 25 angeformter Vorsprung 30. Der Vorsprung 30 wird von dem U-förmig gebogenen Abschnitt des jeweiligen Zugelements 6 umschlungen. Der Vorteil dieser Lösung besteht darin, dass das Zugelement 6 nicht oder nur geringfügig über die Außenseite 31 der Formhälfte 25 übersteht.

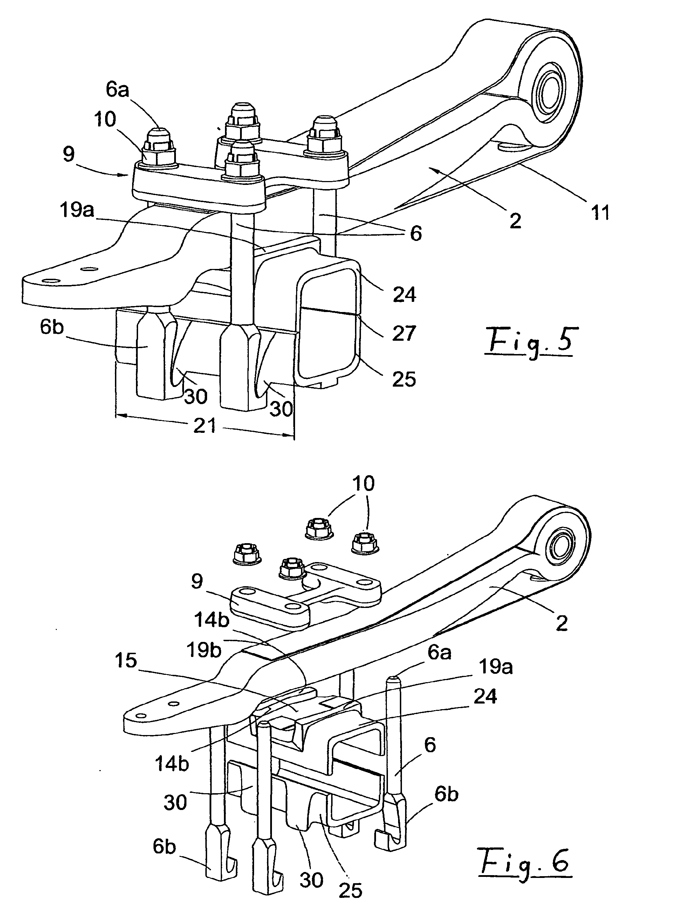

Bei der Ausführungsform nach den Figuren 5 und 6 sind die Zugelemente 6 nicht als Bügel gestaltet, sondern als im Wesentlichen gerade Zugstangen. Längslenkerseitig stützen sich diese, durch die Muttern 10 gesichert, an der gemeinsamen Platte 9 ab. An ihren anderen Enden sind die Zugelemente 6 mit Haken 6b versehen. Die Haken 6b hintergreifen wiederum Vorsprünge 30 des Achskörpers. Die Vorsprünge 30 sind einstückig an der dem Längslenker 2 abgewandten Halbschale bzw. Formhälfte 25 angeformt, hier in Form von Nasen.

In einer nicht dargestellten, weiteren Ausführungsform kann der Verbindungsabschnitt 21 zur variablen Abstandspositionierung der Längslenker 2 auch mehrere, in Längsrichtung L nebeneinander liegende, gleiche Formstrukturen 13, 26 aufweisen. Insbesondere bei dieser Ausführungsform können die beiden Verbindungsabschnitte 21 ohne Zwischenschaltung eines Zentralrohrs als mittlerer Längsabschnitt direkt miteinander verbunden sein. Auf diese Weise ergibt sich ein Achskörper mit vier Längsabschnitten. Auch denkbar ist ein Längsabschnitt 21, der sowohl den linken, als auch den rechten Längslenker 2 aufnimmt. Auf diese Weise ergibt sich ein Achskörper mit drei Längsabschnitten.

Gemeinsam ist den beschriebenen Achseinbindungen, dass es für das Prinzip der Verbindung keine Rolle spielt, ob der Achskörper 1 an der Unterseite (wie z.B. bei Fig. 1), oder an der Oberseite (wie z.B. bei Fig. 3) der Längslenker 2 angeordnet ist.

### Bezugszeichen

- 1: Achskörper
- 2: Längslenker
- 3: Konsole
- 4: Achse
- 5: Luftfeder
- 6: Zugelement
- 6a: Ende
- 6b: Haken
- 9: Platte
- 10: Mutter
- 11: Fangblech
- 13: Formstruktur, Lenkeraufnahme
- 14a: Stützfläche
- 14b: Stützfläche
- 15: Anlagefläche
- 16: Außenseite
- 19a: Rippe
- 19b: Rippe
- 21: Verbindungsabschnitt (Längsabschnitt des Achskörpers)
- 24: Formhälfte, Halbschale
- 25: Formhälfte, Halbschale
- 26: Formstruktur
- 27: Schweißnaht
- 30: Vorsprung
- 31: Außenseite

- L: Längsrichtung

## Patentansprüche

1. Achseinbindung für eine gefederte Fahrzeugachse mit einem langgestreckten Achskörper (1), den Achskörper (1) an seiner Ober- oder Unterseite kreuzenden Längslenkern (2) sowie quer sowohl zu den Längslenkern (2), wie auch zu dem im Einbindungsbereich rohrförmigen Achskörper (1) verlaufenden, diese Teile in gegenseitiger Anlage einbindenden Zugelementen (6), wobei der Achskörper (1) im Einbindungsbereich mit einer Formstruktur (13) versehen ist, welche den Längslenker (2) in Längsrichtung (L) des Achskörpers (1) örtlich bindet,
**dadurch gekennzeichnet,**
**dass** der Achskörper (1) im Einbindungsbereich mit einer Formstruktur (26) versehen ist, welche die Zugelemente (6) formkorrespondierend aufnimmt und in Längsrichtung (L) des Achskörpers (1) örtlich bindet, und dass die Formstruktur (26) eine auf einen Längsabschnitt des Achskörpers (1) beschränkte Vertiefung ist, wobei die Vertiefung eine Verformung des Rohrquerschnitts ist.

2. Achseinbindung nach Anspruch 1,
**dadurch gekennzeichnet,**
**dass** sich die Vertiefung auf einem dem Längslenker (2) abgewandten Teilumfang des Achskörpers (1) befindet, und dass in der Vertiefung das Zugelement (6) sitzt.

3. Achseinbindung nach einem der vorangehenden Ansprüche,
**dadurch gekennzeichnet,**
**dass** sich der Achskörper (1) aus mehreren Längsabschnitten zusammensetzt, und dass die Längsabschnitte umfassen:
a) zwei Verbindungsabschnitte (21), an denen einstückig die Formstrukturen (13, 26) ausgebildet sind und
b) ein Zentralrohr als mittleren Längsabschnitt, an dessen Enden die Verbindungsabschnitte (21) vorzugsweise durch Schweißen befestigt sind.

4. Achseinbindung nach Anspruch 3,
**dadurch gekennzeichnet,**
**dass** die Längsabschnitte des Achskörpers (1) ferner Radträgerabschnitte umfassen, die außen an den Verbindungsabschnitten (21) vorzugsweise durch Schweißen befestigt sind.

5. Achseinbindung nach Anspruch 3 oder 4,
**dadurch gekennzeichnet,**
**dass** jeder Verbindungsabschnitt (21) entlang einer sich in Achskörperlängsrichtung (L) erstreckenden Trennebene in zwei Formhälften (24, 25) unterteilt ist.

6. Achseinbindung nach Anspruch 5,
**dadurch gekennzeichnet,**
**dass** die Formhälften (24, 25) Halbschalen sind, die sich zu einem Rohrstück ergänzen.

7. Achseinbindung nach Anspruch 6,
**dadurch gekennzeichnet,**
**dass** das durch Halbschalen (24, 25) gebildete Rohrstück einen Rechteckquerschnitt mit vier Wandabschnitten und vier Übergangsradien aufweist, und dass die Wandstärke in den Übergangsradien nicht größer als in den Wandabschnitten ist.

8. Achseinbindung nach einem der Ansprüche 5 bis 7,
**dadurch gekennzeichnet,**
**dass** die beiden Stützflächen (14a, 14b) und die Anlagefläche (15) einstückig an der ersten Formhälfte (24) angeformt sind.

9. Achseinbindung nach einem der vorangehenden Ansprüche,
**dadurch gekennzeichnet,**
**dass** im Einbindungsbereich die Unterseiten der einen rechteckigen Querschnitt aufweisenden Längslenker (2) flach und eben sind.

## Claims

1. Axle fixation for a sprung vehicle axle, with an elongate axle body (1), longitudinal control arms (2) crossing the axle body (1) on the upper side or lower side thereof, and also tension elements (6) running transversely both with respect to the longitudinal control arms (2) and with respect to the axle body (1), which is tubular in the fixation region, and fixing said parts in contact against each other, wherein the axle body (1) is provided in the fixation region with a moulded structure (13) which locally fixes the longitudinal control arm (2) in the longitudinal direction (L) of the axle body (1), **characterized in that** the axle body (1) is provided in the fixation region with a moulded structure (26) which receives the tension elements (6) in a shape-corresponding manner and locally fixes the latter in the longitudinal direction (L) of the axle body (1), and **in that** the moulded structure (26) is a depression which is restricted to a longitudinal section of the axle body (1), wherein the depression is a deformation of the tubular cross section.

2. Axle fixation according to Claim 1,
**characterized in that** the depression is located on a partial circumference of the axle body (1) that faces away from the longitudinal control arm (2), and **in that** the tension element (6) sits in the depression.

3. Axle fixation according to either of the preceding claims,
**characterized in that** the axle body (1) is assembled from a plurality of longitudinal sections, and **in that** the longitudinal sections comprise:
a) two connecting sections (21) on which the moulded structures (13, 26) are integrally formed, and
b) a central tube as the central longitudinal section, to the ends of which the connecting sections (21) are fastened, preferably by welding.

4. Axle fixation according to Claim 3,
**characterized in that** the longitudinal sections of the axle body (1) furthermore comprise wheel carrier sections which are fastened to the outside of the connecting sections (21), preferably by welding.

5. Axle fixation according to Claim 3 or 4,
**characterized in that** each connecting section (21) is divided along a separating plane extending in the longitudinal direction (L) of the axle body into two moulded halves (24, 25).

6. Axle fixation according to Claim 5,
**characterized in that** the moulded halves (24, 25) are half shells which add together to form a tubular section.

7. Axle fixation according to Claim 6,
**characterized in that** the tubular section formed by half shells (24, 25) has a rectangular cross section with four wall sections and four transition radii, and **in that** the wall thickness in the transition radii is not greater than in the wall sections.

8. Axle fixation according to one of Claims 5 to 7,
**characterized in that** the two supporting surfaces (14a, 14b) and the contact surface (15) are integrally formed on the first moulded half (24).

9. Axle fixation according to one of the preceding claims,
**characterized in that** the lower sides of the longitudinal control arms (2) which have a rectangular cross section are flat and level in the fixation region.

## Revendications

1. Fixation d'essieu pour un essieu suspendu de véhicule, comprenant un corps d'essieu allongé (1), des bras oscillants longitudinaux (2) croisant le corps d'essieu (1) au niveau de sa face supérieure ou inférieure ainsi que des éléments de traction (6) s'étendant transversalement non seulement par rapport aux bras oscillants longitudinaux (2) mais aussi par rapport au corps d'essieu (1) tubulaire dans la région de fixation et fixant ces parties en appui mutuel, le corps d'essieu (1) étant pourvu d'une structure façonnée (13) dans la région de fixation, laquelle structure fixe localement le bras oscillant longitudinal (2) dans la direction longitudinale (L) du corps d'essieu (1),
**caractérisée en ce que**
le corps d'essieu (1) est pourvu d'une structure façonnée (26) dans la région de fixation, laquelle structure reçoit les éléments de traction (6) avec correspondance de formes et les fixe localement dans la direction longitudinale (L) du corps d'essieu (1), et **en ce que** la structure façonnée (26) est un renfoncement limité à une portion longitudinale du corps d'essieu (1), le renfoncement étant une déformation de la section transversale tubulaire.

2. Fixation d'essieu selon la revendication 1,
**caractérisée en ce que**
le renfoncement se trouve sur une périphérie partielle du corps d'essieu (1) opposée au bras oscillant longitudinal (2) et **en ce que** l'élément de traction (6) est placé dans le renfoncement.

3. Fixation d'essieu selon l'une quelconque des revendications précédentes,
**caractérisée en ce que**
le corps d'essieu (1) est composé de plusieurs portions longitudinales et **en ce que** les portions longitudinales comportent :
a) deux portions de liaison (21) sur lesquelles sont réalisées d'un seul tenant les structures façonnées (13, 26) et
b) un tube central en tant que portion longitudinale centrale, aux extrémités duquel les portions de liaison (21) sont fixées de préférence par soudage.

4. Fixation d'essieu selon la revendication 3,
**caractérisée en ce que**
les portions longitudinales du corps d'essieu (1) comportent en outre des portions de support de roue qui sont fixées à l'extérieur, de préférence par soudage, aux portions de liaison (21).

5. Fixation d'essieu selon la revendication 3 ou 4,
**caractérisée en ce que**
chaque portion de liaison (21) est divisée en deux moitiés de forme (24, 25) le long d'un plan de séparation s'étendant dans la direction longitudinale du corps d'essieu (L).

6. Fixation d'essieu selon la revendication 5,
**caractérisée en ce que**
les moitiés de forme (24, 25) sont des demi-coques qui se complètent pour former une pièce tubulaire.

7. Fixation d'essieu selon la revendication 6,
**caractérisée en ce que**
la pièce tubulaire formée par les demi-coques (24, 25) présente une section transversale rectangulaire dotée de quatre portions de paroi et de quatre rayons de transition, et **en ce que** l'épaisseur de paroi dans les rayons de transition n'est pas supérieure à l'épaisseur de paroi dans les portions de paroi.

8. Fixation d'essieu selon l'une quelconque des revendications 5 à 7,
**caractérisée en ce que**
les deux surfaces de support (14a, 14b) et la surface d'appui (15) sont formées d'un seul tenant sur la première moitié de forme (24).

9. Fixation d'essieu selon l'une quelconque des revendications précédentes,
**caractérisée en ce que**
les faces inférieures du bras oscillant longitudinal (2) présentant une section transversale rectangulaire sont planes et unies dans la région de fixation.
